# EUROPÄISCHE PATENTSCHRIFT

(11) **EP 0 430 016 B1**
(45) Veröffentlichungstag und Bekanntmachung des Hinweises auf die Patenterteilung: **23.02.1994**
(21) Anmeldenummer: 90122098.8
(22) Anmeldetag: 19.11.1990
(51) Int. Cl.: H02B 1/28, H02G 3/08, H02G 3/22

(54) **Vorrichtung zum Abdichten eines Kabeldurchführungsloches in einem Schaltschrank**
Device for sealing a cable feed-through hole in a switchgear cubicle
Dispositif pour l'étanchement d'un trou de traversée de câble d'une armoire de commutation

(30) Priorität: 23.11.1989 DE 8913829 U
(43) Veröffentlichungstag der Anmeldung: 05.06.1991
(73) Patentinhaber: Brandner, Hans, D-83471 Schönau (DE)
(72) Erfinder: Brandner, Hans, D-83471 Schönau (DE)
(74) Vertreter: Haft, von Puttkamer, Berngruber, Czybulka

(56) Entgegenhaltungen:
- EP-A- 0 244 514
- DE-A- 2 720 936
- GB-A- 713 389
- US-A- 3 545 773

## Beschreibung

Die Erfindung bezieht sich auf eine Vorrichtung zum Abdichten eines in der Schrankwand eines Schaltschranks angebrachten Lochs zur Durchführung eines Kabels in den Schaltschrank.

Eine Vorrichtung entsprechend dem Oberbegriff des Anspruchs 1 ist aus der DE-A-2720936 bekannt.

Wenn in einen Schaltschrank ein Kabel eingeführt werden soll, muß die Schrankwand mit einem Loch versehen werden, durch das das Kabel hindurchgeführt wird. Die Kabel sind häufig bereits mit einem Stecker versehen, der beispielsweise angegossen sein kann. Die Stecker können eine beträchtliche Größe aufweisen, beispielsweise wenn sie als Datenstecker für ein vieladriges Datenkabel ausgebildet sind. Wenn das Kabel mit dem Stecker in die Schrankwand eingeführt werden soll, muß das Loch in der Schrankwand entsprechend groß ausgebildet werden.

Um das Loch nach dem Hindurchführen des Kabels mit dem Stecker zu verschließen, wird es heutzutage im allgemeinen mit zwei Platten abgedeckt, die auf das Loch links und rechts des Kabels gelegt werden, so daß sie aneinanderstoßen. Die Platten weisen zwei halbkreisförmige Ausnehmungen auf, so daß sich, wenn sie zusammenstoßen, eine kreisrunde Öffnung bildet, durch die das Kabel hindurchtritt.

Durch die Fuge zwischen den beiden Platten und die kreisförmige Öffnung für das Kabel läßt die Dichtigkeit dieser Abdeckung jedoch zu wünschen übrig. Auch wird das Kabel nicht fixiert, so daß der Stecker in dem Schaltschrank bereits herausgezogen wird, wenn nur ein relativ geringer Zug auf das Kabel wirkt.

Aufgabe der Erfindung ist es, eine Vorrichtung der eingangs genannten Art zur Verfügung zu stellen, die eine hohe Dichtigkeit und eine Zugentlastung des Kabels gewährleistet.

Dies wird erfindungsgemäß mit der im Anspruch 1 gekennzeichneten Vorrichtung erreicht. In den Unteransprüchen sind vorteilhafte Ausgestaltungen der Erfindung wiedergegeben.

Unter einem Schaltschrank ist erfindungsgemäß jede in einem Gehäuse angeordnete Schaltanlage zu verstehen, also beispielsweise auch ein Schaltkasten oder ein Schaltpult.

Mit dem gummielastischen Material, mit dem die beiden Gehäuseteile der erfindungsgemäßen Vorrichtung gefüllt sind, wird das Kabel umschlossen. Dadurch wird es sicher abgedichtet und zugleich auf Zug fixiert. Als gummielastisches Material wird vorzugsweise Schaumgummi oder ein Kunststoffschaumstoff verwendet.

Die beiden Gehäuseteile sind fest miteinander verbunden, beispielsweise verschraubt.

Um die Zugentlastung des Kabels zu erhöhen, ist es vorteilhaft, an der Innenseite eines der beiden Gehäuseteile eine Schelle vorzusehen, mit der das Kabel befestigt wird.

Um mit der erfindungsgemäßen Vorrichtung mehrere Kabel durch ein gemeinsames Loch in der Schrankwand durchführen zu können, ist das Gehäuse vorzugsweise an seiner Rückseite mit mehreren Öffnungen versehen, durch die die Teilungsfuge hindurchgeht. Die nicht benutzten Öffnungen können durch Blindstopfen verschlossen sein.

Um das Gehäuse an der Schrankwand eines Schaltschranks schnell befestigen und wieder lösen zu können, ist es vorteilhaft, jedes Gehäuseteil an einander gegenüberliegenden Seitenwänden des Gehäuses außen mit wenigstens einem Zapfen zu versehen und an dem Schrankwandgehäuse Haken anzubringen, die die Zapfen übergreifen.

Die Montage der erfindungsgemäßen Vorrichtung wird weiter dadurch vereinfacht, wenn dem Zapfen an einem Gehäuseteil ein Zapfen an dem anderen Gehäuseteil gegenüberliegt und die beiden Zapfen durch Haken übergriffen werden, die an einem Schwenkbügel angeordnet sind, der an der Schrankwand drehbar befestigt ist.

Nachstehend ist die Erfindung anhand der Zeichnung näher erläutert. Darin zeigen:
- Fig. 1: eine Ausführungsform der erfindungsgemäßen Vorrichtung in perspektivischer Wiedergabe, wobei die Gehäusehälften voneinander getrennt angeordnet sind.
- Fig. 2: die Vorrichtung nach Fig. 1 in zusammengesetztem Zustand vor der Befestigung an einer Schaltschrankwand.

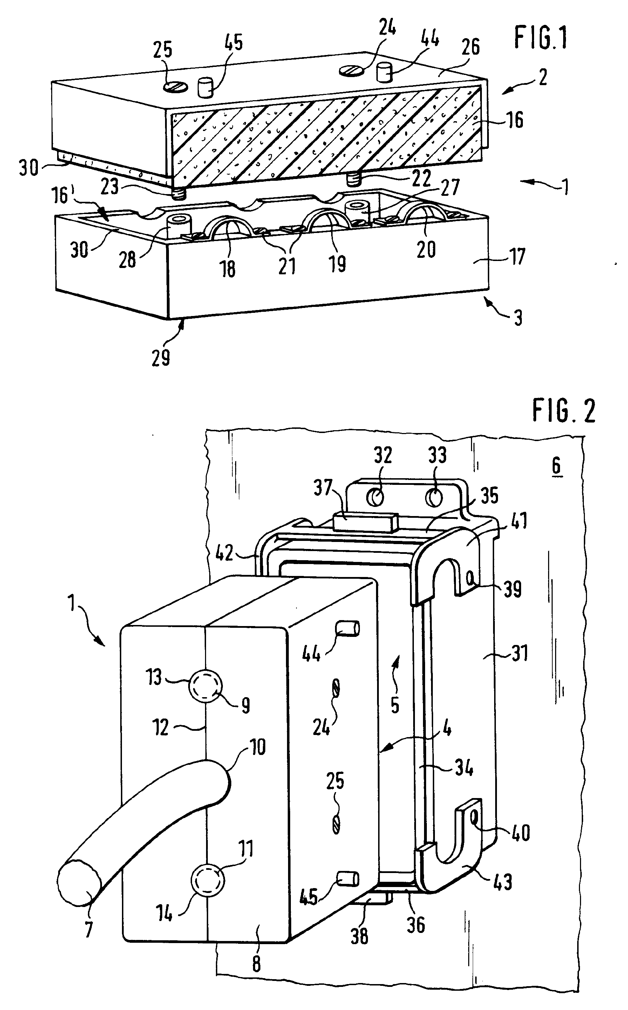

Die Vorrichtung weist ein topfförmiges, rechteckig ausgebildetes Gehäuse 1 auf, das zweigeteilt ist. Die Teilungsebene 1' verläuft durch die Gehäusemitte, und zwar in Längsrichtung des Gehäuses 1. Auf diese Weise werden die in Fig. 1 näher dargestellten Gehäusehälften 2 und 3 gebildet.

Wie aus Fig. 2 ersichtlich, wird das Gehäuse 1 mit seinem vorderen Rand, also der Öffnung 4 um ein Loch 5 angeordnet, das in der Schrankwand 6 eines Schaltschranks vorgesehen ist, um ein Kabel 7 mit einem in der Zeichnung nicht dargestellten Stecker durch die Schrankwand 6 hindurch in den Schaltschrank zu führen.

An seiner Rückwand oder -seite 8 weist das Gehäuse 1 drei Öffnungen 9 bis 11 auf. Die Teilungsebene bzw. die Teilungsfuge 12 geht durch die Öffnungen 9 bis 11 in der Mitte hindurch. Die nicht benutzten Öffnungen 9 und 11 sind mit Blindstopfen 13 und 14 verschlossen. Die Blindstopfen 13, 14 können so ausgebildet sein, daß der mittlere Teil heraustrennbar ist unter Bildung eines Dichtrings um das durch die betreffende Öffnung 9 bis 11 hindurchgehende Kabel 7. Die Blindstopfen 13, 14 bestehen deshalb vorzugsweise aus einem gummielastischem Material.

Gemäß Fig. 1 ist jede Gehäusehälfte 2, 3 innen mit einem Körper aus gummielastischem Material, beispielsweise einem Schaumstoffklotz 16, 16' gefüllt. Die komprimierbaren Schaumstoffklötze 16, 16' können dabei, wie bei dem Schaumstoffklotz 16 in Fig. 1 dargestellt, über die Gehäusehälfte 2 hinausragen.

Die eine Gehäusehälfte 3 ist an der Vorderseite mit einem Steg 17 versehen, auf dessen der Gehäusehälfte 2 zugewandten Kante drei Schellen 18 bis 20 sitzen, die mit Schrauben 21 befestigt sind, die, wenn das Kabel 7 in die betreffende Schelle, also bei Anordnung des Kabels 7 in der mittleren Öffnung 10 nach Fig. 2, in die Schelle 19 gelegt worden ist, angezogen werden, um das Kabel 7 zu fixieren und damit den Stecker im Schaltkasten von Zugkräften zu entlasten, die über das Kabel auf ihn ausgeübt werden.

Die Gehäusehälften 2, 3 werden durch Schrauben 22, 23 zusammengehalten, deren Köpfe 24, 25 an der Außenseite des Bodens 26 der Gehäusehälfte 2 sitzen und die den Schaumstoffklotz 16 durchragen, um in Muttern 27, 28 einzugreifen, die sich hülsenförmig von dem Boden 29 der Gehäusehälfte 3 durch den Schaumstoffklotz 16' hindurch zu den Schrauben 23, 24 erstrecken.

Das Gehäuseteil 2 und das Gehäuseteil 3, einschließlich Steg 17 und der nachstehend noch näher erläuterten Zapfen 44, 45 bestehen aus jeweils einem Gußteil. Auch können die Muttern 27, 28 Bestandteil des Gußteils sein, aus dem das Gehäuseteil 3 besteht. Dazu werden in dem Gußteil an der Innenseite des Bodens 29 Vorsprünge vorgesehen, in die ein Gewinde geschnitten wird.

An den einander zugewandten Kanten 30 der beiden Gehäuseteile ist in einer Nut ein nicht dargestellter Dichtring, z. B. ein O-Ring, eingelassen, um die Teilungsfuge 12 abzudichten. Die eigentliche Abdichtung des Lochs 5 in der Schrankwand übernehmen jedoch die gegeneinander gepreßten Schaumstoffklötze 16, 17, die zugleich mit der Schelle 19 das Kabel 7 fixieren.

Um das Gehäuse 1 an der Schrankwand 6 zu befestigen, ist um das Loch 5 ein rahmenförmiges Teil 31 mittels Schrauben 32, 33 befestigt. Zwei weitere, in der Zeichnung nicht dargestellte Schrauben sind am gegenüberliegenden Ende des rahmenförmigen Teils 31 vorgesehen. An der dem Gehäuse 1 zugewandten Kante ist das Teil 31 mit einer Dichtung in Form eines Profilgummis 34 versehen.

Die einander gegenüberliegenden kürzeren Seiten des rechteckigen, rahmenförmigen Teils 3 werden jeweils von einem Bügel 35 bzw. 36 übergriffen, die mit einer Betätigungslasche 37, 38 versehen sind. Jeder Bügel 35, 36 ist um eine zur Schrankwand 6 und zur kürzeren Seite des rahmenförmigen Teils 31 parallele Achse 39, 40 verschwenkbar an der einen bzw. der anderen längeren Seite des rechteckigen, rahmenförmigen Teils 31 angelenkt.

An jedem Bügel 35, 36 sind seitlich am Rahmenteil 31 Haken 41 bis 43 angebracht. Ferner ist jedes Gehäuseteil 2, 3 an der Außenseite mit Zapfen 44, 45 versehen. Die Zapfen 44, 45 werden von den Haken 41 bis 43 an den Bügeln 35, 36 übergriffen, wenn das Gehäuse 1 an dem rahmenförmigen Teil 31 und damit an der Schrankwand 1 befestigt wird.

Um das Gehäuse 1 beim Aufsetzen auf das rahmenförmige Teil 31 genau zu positionieren, können an den vier Seiten der dem Teil 31 zugewandten Stirnseite des Gehäuses 1 nicht dargestellte Fixierstege vorgesehen sein, die in das rahmenförmige Teil 31 eingreifen.

## Patentansprüche

1. Vorrichtung zum Abdichten eines in einer Schrankwand (6) eines Schaltschranks angebrachten Lochs (5) zur Durchführung eines Kabels (7) in den Schaltschrank, mit zwei an der Außenseite der Schrankwand (6) an gegenüberliegenden Seiten des Lochs (5) angeordneten Teilen, wobei jedes der beiden Teile innen mit einem Körper (16, 16') aus Schaumgummi oder Kunststoffschaumstoff versehen ist, welche das Kabel (7) umschließen, wobei an einem der beiden Teile wenigstens eine Schelle (18 bis 20) zur Befestigung des Kabels (7) befestigt ist und die beiden Teile durch Schrauben (22, 23) miteinander verbunden sind, dadurch gekennzeichnet, daß die beiden Teile durch die beiden Teile (2, 3) eines zweiteiligen, rechteckigen Gehäuses (1) gebildet sind, welches an seiner von der Schrankwand (6) abgewandten Seite (8) wenigstens eine Öffnung (9 bis 11) zur Durchführung des Kabels (7) aufweist und mit seinem der Schrankwand (6) zugewandten Rand um das Loch (5) in der Schrankwand (6) angeordnet ist, daß die Teilungsfuge (12), die das Gehäuse (1) der Länge nach teilt, durch die Kabelöffnungen (9 bis 11) an der von der Schaltschrankwand (6) abgewandten Seite (8) des Gehäuses (1) hindurchgeht, daß die Schelle (18 bis 20) zur Kabelbefestigung an der Innenseite eines der beiden Gehäuseteile (3) befestigt ist, und daß die Schrauben (22, 23) in Gewinde eingreifen, die in hülsenförmigen Vorsprüngen (27, 28) an der Innenseite eines Gehäuseteils (3) vorgesehen sind.

2. Vorrichtung nach Anspruch 1, dadurch gekennzeichnet, daß die Körper (16, 16') aus Schaumgummi oder Kunststoffschaumstoff durch Klötze gebildet werden.

3. Vorrichtung nach einem der vorstehenden Ansprüche, dadurch gekennzeichnet, daß zur Befestigung des Gehäuses (1) an der Schrankwand (6) jedes Gehäuseteil (2,3) an einander gegenüberliegenden Außenseiten des Gehäuses (1) mit wenigstens einem Zapfen (44, 45) versehen ist und an der Schrankwand (6) Haken (41 bis 43) vorgesehen sind, die die Zapfen (44, 45) übergreifen.

4. Vorrichtung nach Anspruch 3, dadurch gekennzeichnet, daß ein an der Schrankwand (6) verschwenkbar befestigter Schwenkbügel (35, 36) vorgesehen ist, an dessen beiden Enden jeweils ein Haken (41, 42, 43) angeordnet ist.

## Claims

1. A device for sealing off a hole (5) in a wall (6) of a switch box for guiding a cable (7) into the switch box having two parts being arranged on opposite sides of the hole (5) at the outside of the box wall (6), each of both parts being provided inside with a body (16, 16') of foam rubber or plastic foam, surrounding the cable (7), a bracket (18 to 20) for fixing the cable (7) being fastened to at least one of both parts, and both parts being fixed to each other by screws (22, 23), characterized in that both parts are formed by the two parts (2, 3) of a rectangular housing (1) comprising two parts, which has at least one opening (9 to 11) at its side (8) opposite to the box wall (6) for guiding there through the cable (7) and which is arranged with its rim adjacent to the box wall (6) around the hole (5) in the box wall (6), that the separating line (12) which separates the housing along the length goes through the cable openings (9 to 11) at the side (8) of the housing (1) opposite to the box wall (6), that the bracket (18 to 20) for fixing the cable is fastened to the inside of one of both housing parts (3), and that the screws (22, 23) engage threads being provided in sleeve-shaped projections (27, 28) on the inside of one housing part (3).

2. A device according to claim 1, characterized in that the bodies (16, 16') of foam rubber of plastic foam are formed by blocks.

3. A device according to anyone of the preceding claims characterized in that each housing part (2, 3) is provided with at least one peg (44, 45) on opposite outer sides of the housing (1), and hooks (41 to 43) are provided on the box wall (6) to grip over the pegs (44, 45) for fastening the housing (1) to the box wall (6).

4. A device according to claim 3, characterized in that a pivot bar (35, 36) is pivotally fastened to the box wall (6), hooks (41, 42, 43) being arranged on each of its two ends.

## Revendications

1. Dispositif destiné à rendre étanche une partie creuse (5) ménagée dans une paroi d'armoire (6) d'une armoire électrique, pour faire passer un câble (7) dans l'armoire électrique, pourvu de deux parties situées sur la face extérieure de la paroi d'armoire (6), des deux côtés opposés de la partie creuse (5), chacune des deux parties étant pourvue, à l'intérieur, d'un corps (16, 16') en caoutchouc mousse ou en mousse synthétique, et entourant le cable (7), au moins une bride (18 à 20) étant montée sur l'une des deux parties pour fixer le cable (7) et les deux parties étant reliées au moyen de vis (22, 23), caractérisé en ce que les deux parties sont formées par les deux parties (2, 3) d'un boîtier (1) double rectangulaire qui présente, sur son côté (8) opposé à la paroi d'armoire (6), au moins une ouverture (9 à 11) pour y faire passer le câble (7) et dont le bord orienté en direction de la paroi d'armoire (6) est logé dans la partie creuse (5) dans la paroi d'armoire (6), en ce que la fente de séparation (12), qui sépare le boîtier (1) dans le sens de la longueur, s'étend à travers les ouvertures (9 à 11) destinées aux câbles ménagées sur le côté (8) du boîtier (1) opposé à la paroi d'armoire (6), en ce que la bride (18 à 20) de fixation du câble est montée sur la face interne de l'une des deux parties de boîtier (3) et en ce que les vis (22, 23) s'engagent dans des filetages qui sont prévus dans des saillies (27, 28) en forme de douilles présentes sur la face interne d'une partie de boîtier (3).

2. Dispositif selon la revendication 1, caractérisé en ce que les corps (16, 16') en caoutchouc mousse ou en mousse synthétique sont formés par des blocs.

3. Dispositif selon l'une des revendications précédentes, caractérisé en ce que, pour la fixation du boîtier (1) dans la paroi d'armoire (6), chaque partie de boîtier (2, 3) est pourvue d'au moins un tenon (44, 45) sur les faces externes, opposées l'une à l'autre, du boîtier (1) et en ce que des crochets (41 à 43) sont prévus sur la paroi d'armoire (6), qui s'engagent sur les tenons (44, 45).

4. Dispositif selon la revendication 3, caractérisé en ce qu'est prévu un étrier pivotant (35, 36), monté pivotant sur la paroi d'armoire (6), aux deux extrémités duquel est respectivement prévu un crochet (41, 42, 43).
